(19) **Europäisches Patentamt**
**European Patent Office**
**Office européen des brevets**

(11) **EP 4 361 893 B1**

(12) **EUROPEAN PATENT SPECIFICATION**

(45) Date of publication and mention
of the grant of the patent:
**15.04.2026   Bulletin 2026/16**

(21) Application number: **22306615.0**

(22) Date of filing: **25.10.2022**

(51) International Patent Classification (IPC):
***G06N 3/065*** *(2023.01)*

(52) Cooperative Patent Classification (CPC):
**G06N 3/065;** G06N 3/044; G06N 3/0499

(54) **NEUROMORPHIC CIRCUIT IMPLEMENTING AN OSCILLATORY NEURAL NETWORK**

NEUROMORPHE SCHALTUNG MIT EINEM OSZILLIERENDEN NEURONALEN NETZWERK

CIRCUIT NEUROMORPHIQUE METTANT EN OEUVRE UN RÉSEAU NEURONAL OSCILLATOIRE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**01.05.2024   Bulletin 2024/18**

(73) Proprietors:
• **Centre National de la Recherche Scientifique**
**75016 Paris (FR)**
• **Université de Montpellier**
**34090 Montpellier (FR)**

(72) Inventors:
• **DELACOUR, Corentin**
**34070 Montpellier (FR)**
• **TODRI-SANIAL, Aïda**
**34730 Prades-le-Lez (FR)**

(74) Representative: **Hautier IP**
**20, rue de la Liberté**
**06000 Nice (FR)**

(56) References cited:
**EP-A1- 4 036 793**

• N��EZ JUAN ET AL: "Oscillatory Neural Networks Using VO2 Based Phase Encoded Logic", FRONTIERS IN NEUROSCIENCE, vol. 15, 16 April 2021 (2021-04-16), XP093024697, DOI: 10.3389/fnins.2021.655823
• TODRI-SANIAL AIDA: "SophIA Summit 2020 Talk Abstract "Neuromorphic Computing based on Oscillatory Neural Networks"", 20 November 2020 (2020-11-20), XP093024361, Retrieved from the Internet <URL:https://hal-lirmm.ccsd.cnrs.fr/lirmm-03022129v1/document> [retrieved on 20230216]
• CATHERINE D SCHUMAN ET AL: "A Survey of Neuromorphic Computing and Neural Networks in Hardware", ARXIV.ORG, CORNELL UNIVERSITY LIBRARY, 201 OLIN LIBRARY CORNELL UNIVERSITY ITHACA, NY 14853, 19 May 2017 (2017-05-19), XP080948931

**Description**

TECHNICAL FIELD OF THE INVENTION

The present invention concerns a neuromorphic circuit implementing an oscillatory neural network.

BACKGROUND OF THE INVENTION

The development of many applications necessitates a large amount of data process with complex processing methods carried out by calculation units.

Autonomous vehicle is a striking example of such applications. Indeed, such specific application also requires that the physical implementation of the calculation units and the data storage means adapted to carry out the processing methods to be close to the sources of input data, such as the sensors.

One way to fabricate such calculation units is to use a CMOS (Complementary metal-oxide-semiconductor) implementation.

Indeed, innovations in CMOS technology and the continuous scaling roadmap of transistors outlined by Moore's prediction have enabled today's powerful computers and handheld devices. Mere miniaturization of devices was initially sufficient to reduce the area and power requirements of transistors, yet for sub-100 nanometers (nm) technology nodes, this was not enough. Two main paths were taken 1) to change the device materials to reduce its parasitics, and 2) change the device geometry for better channel control. First, the metal gates and high-K oxides were introduced to improve the transistor performance. Such material level improvement eventually led to a structural change and the introduction of new gate geometry such as fin field-effect transistors (FinFET). FinFETs allowed controlling the channel from three sides. Recently, TMSC has announced volume production as of 2020 of its 5nm gate-all-around FinFET transistors made available by EUV process technology and with a target to start production of 3 nm node by 2022.

Nevertheless, despite the advancements in the transistor device and fabrication technologies, CMOS is facing physical barriers - as scaling is approaching a fundamental physical limit with the transistor channel length becoming comparable to the size of a handful of atoms. Such channel lengths lead to significant leakage currents and suffer from lower yield due to high process variations. Consequently, this would translate to more power consumption and more expensive chips, that would be an overkill to what Moore's law has been promising so far. At this point, the scientific and industrial communities have focused on developing novel devices that go beyond CMOS transistors. Emerging memories such as magnetic and phase change (PCRAM, RRAM, STT-RAM), and new transistor technologies such as tunnel, negative capacitance and 1D/2D channel material (TFET, NC-FET, CNT-FET/MOS$_2$-FET) are being investigated as potential solutions to extend the performance and capacity of Von Neumann computing paradigm.

Despite the on-going research on novel device geometries and channel materials, there is a tremendous effort on exploring innovative non-Von Neumann computing architectures to meet the requirements of data-centric applications. In the classical von Neuman architecture, data moves from memory to the processor, which for processing large datasets becomes infeasible as a large amount of power is consumed in data movement, hence, arises the memory-wall problem.

Non-Von Neumann architectures like brain-inspired architectures based on neural networks have drawn a lot of interest as more understanding of how the brain and neurons work is gained. Neural networks aim to mimic the parallelism of the brain and their implementation in resource-intensive hardware such as GPUs have revolutionized AI applications. For example, current CMOS implementations of neural networks such as Google's Tensor Processing Unit can offer up 86X more computations per watt. Even though these systems are more power-efficient compared to a CPU due to their architecture, the CMOS implementations of neural networks will eventually face the problems described earlier.

Neuromorphic circuits appear to be the solution to go beyond Von Neuman architecture. These systems are based on brain architecture with artificial neural networks made of synapses and neurons. Many artificial neural network algorithms for machine learning are already used on software, such as spiking neural networks, convolutional neural networks, Hopfield neural networks. Their integration into hardware appeared in the last decade and revolutionized the world of artificial intelligence by enabling parallel architecture.

An alternative computing approach based on artificial neural networks uses oscillators to compute or oscillatory neural networks. Such an approach differs from classical CMOS and classical von Neumann where building blocks are analog and perform computations efficiently. Moreover, data is encoded on the oscillator signals phase, which is a departure from the classical voltage level-based data encoding (such as amplitude voltage to represent a logical bit '1' or '0'). Oscillatory neural networks can perform computations efficiently and can be used to build a more extensive neuromorphic system.

Document XP093024361, which is a talk abstract, "SophIA Summit 2020 Talk Abstract 'Neuromorphic Computing based on Oscillatory Neural Networks'" (https://hal-lirmm.ccsd.cnrs.fr/ lirmm-03022129v1/document), is relevant prior art to the invention and discloses neuromorphic computing based on oscillatory neural networks with oscillating neuron units (e.g. VO2 metal-insulator-transition devices) and memristive synapses (e.g. 2D MoS2) implementing weighted coupling, and it does not disclose at least a shaper block converting the digital output signal of a hysteresis block into an analog signal having a triangular waveform, the shaper block having an input and an output.

SUMMARY OF THE INVENTION

There is therefore a need for a compact neuromorphic circuit adapted to implement an oscillatory neural network.

To this end, the specification describes a neuromorphic circuit implementing an oscillatory neural network, the neuromorphic circuit comprising :

- neuron units, each neuron unit being an analog oscillator adapted to convert an incoming analog signal having a triangular waveform on an analog input of the neuron unit into a digital output signal, and
- synapse units, each synapse unit being adapted to multiply a digital output from a neuron unit with a respective synaptic weight to output a weighted signal sent to the analog input of a neuron unit.

Moreover, each neuron unit comprises:

- a hysteresis block having an input and an output, the output of the hysteresis block being a digital output signal, and
- a shaper block converting the digital output signal of the hysteresis block into said analog signal having a triangular waveform, the shaper block having an input and an output, and
- a connection between the input of the hysteresis block and the output of the shaper block wherein said analog signal is injected.

The shaper block comprises a commanded pull-up current source and a commanded pull-down current source and each synapse unit comprises at least one of a synaptic weight amplitude block and a synaptic phase block.

According to further aspects of the neuromorphic circuit, which are advantageous but not compulsory, the neuromorphic circuit might incorporate one or several of the following features, taken in any technically admissible combination:

- the hysteresis block is a regenerative comparator with hysteresis.
- the hysteresis block is a Schmitt trigger.
- the synaptic weight amplitude block comprises at least one capacitor.
- the synaptic weight amplitude block comprises several programmable capacitors.
- the synaptic phase block comprises a delay unit.
- each synapse unit further comprises a control unit adapted to convert the synaptic weight in an amplitude value and a phase value, to send the amplitude value to the synaptic weight amplitude block and to send the phase value to the synaptic phase block.
- the neuromorphic circuit comprises digital connections between the synapse units and the neuron units.
- the neuromorphic circuit is a programmable circuit, such as an ASIC.

BRIEF DESCRIPTION OF THE DRAWINGS

The invention will be better understood on the basis of the following description which is given in correspondence with the annexed figures and as an illustrative example, without restricting the object of the invention. In the annexed figures:

- figure 1 is a schematic representation of a neuromorphic circuit implementing an oscillatory neural network with enlarged block diagrams of respectively a neuron unit and a synapse unit,
- figure 2 is a schematic representation of an example of circuit of a neuron unit according to figure 1, and
- figure 3 is a schematic representation of an example of circuit of a synapse unit according to figure 1.

DETAILED DESCRIPTION OF THE PREFERRED EMBODIMENTS

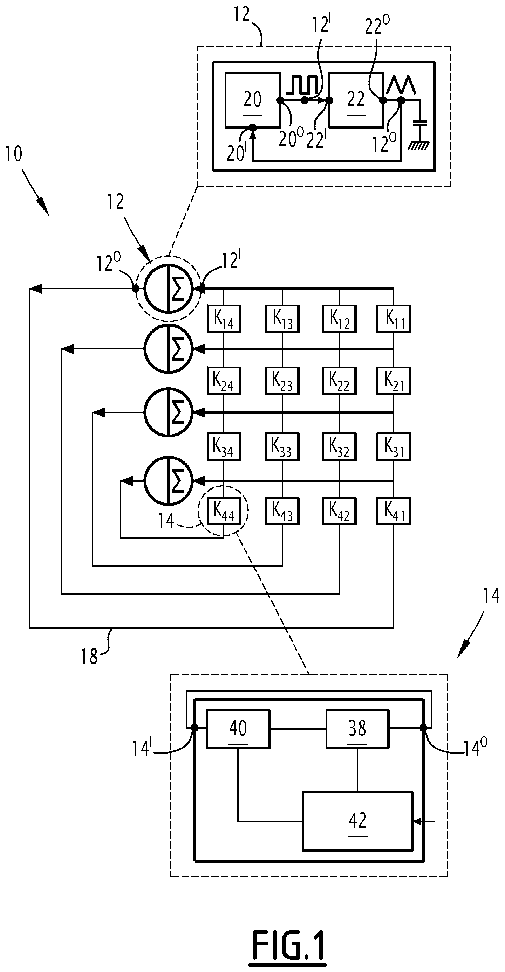

A neuromorphic circuit 10 is represented in figure 1.

The neuromorphic circuit 10 is a circuit implementing an oscillatory neural network.

The abbreviation ONN is often used to designate the oscillatory neural network.

A neural network is a mathematical function made of a set of neurons linked by synapses.

A synaptic weight is associated with each synapse. It is often a real number, which takes both positive and negative values. In some cases, synaptic weight is a complex number.

A neural network is an oscillatory neural network when the neurons are oscillators.

Unlike any other neural network such as the most commonly used spiking neural network, in oscillatory neural networks, the information is computed in the phase domain rather than the time domain. By describing neurons as oscillators, it is the phase difference between oscillating neurons that enables to encode information rather than the rate of spikes as in spiking neural network.

This means that oscillatory neural networks are coupled oscillators with distinctive phase differences. The output is encoded on the phase differences to represent either in-phase (i.e. logic value 0) or out-of- phase (i.e. logic value 1).

Distinctive phase relations are obtained by the synchronization of the coupling network dynamics. Phase differences correspond to the memorized patterns in the network.

The neuromorphic circuit 10 is a programmable circuit, such as an ASIC.

ASIC stands for an application-specific integrated circuit and designates an integrated circuit (IC) chip customized for a particular use, rather than intended for general-purpose use.

The neuromorphic circuit 10 comprises neuron units 12 and synapse units 14.

In the present example, four neuron units 12 are represented on figure 1 and 16 synapse units 14.

The 16 synapse units 14 are arranged in an array, whose lines and column are respectively indexed by an integer m and an integer n.

The first neuron unit 12 is linked to each synapse units 14 whose line is indexed by an integer m = 1.

However, this is only for an illustrative purpose, the number of neuron units 12 and synapse units 14 being as desirable for the application.

The neuromorphic circuit 10 further comprises digital connections 18 between the synapse units 14 and the neuron units 12.

The neuron units 12 are here analog circuits, wherein phase computation occurs while Digital synaptic signals propagate through the synapse units 14 in a feedforward manner from the output of a neuron unit 12 to the input of other neuron units 12.

This implies that the propagation is carried out with digital connections 18 and achieved in the digital domain.

This means that the neuromorphic circuit 10 is a mixed circuit with calculation in the analog domain and propagation in the digital domain.

This notably enables to benefit from known and efficient digital circuit design to achieved bufferization or multiplexing. This also facilitates the integration of the neuromorphic circuit 10 with other CMOS circuits.

The neuron units 12 are achieving the role of neurons in the ONN implemented by the neuromorphic circuit 10.

In the present case, the neuron unit 12 has the role of ensuring that phase computing is achieved via the processing of an incoming analog signal having a specific waveform.

The neuron unit 12 also has the role of generating output digital signals. Such digital signals will be used to propagate the calculated phase information through the ONN both by a feedforward propagation and a recurrent signal propagation.

This means that the neuron unit 12 has an analog input $12^I$ and a digital output $12°$.

In what follows, each block or unit with the reference sign X has an input labelled $X^I$ and an output labelled $X°$.

For this, in the present case, each neuron unit 12 is an analog oscillator adapted to convert an incoming analog signal having the specific waveform into a digital output signal.

Each neuron unit 12 is thus a relaxation oscillator.

Many specific waveforms can be considered, such as sine wave, sawtooth wave (both outside the scope of the claimed invention), or triangular wave.

According to the present invention, the specific waveform is triangular.

Accordingly, the incoming analog signal is analog triangular input oscillations.

In what follows, it is assumed that the specific waveform is triangular.

As apparent in the enlarged block diagram of figure 1, each neuron unit 12 comprises a hysteresis block 20, a shaper block 22 and a connection unit 24 connecting the two blocks 20 and 22.

The hysteresis block 20 holds the neuron state and commands the shaper block 22.

The output of the hysteresis block 20 on its output $20^O$ is a digital output signal as apparent in the figures.

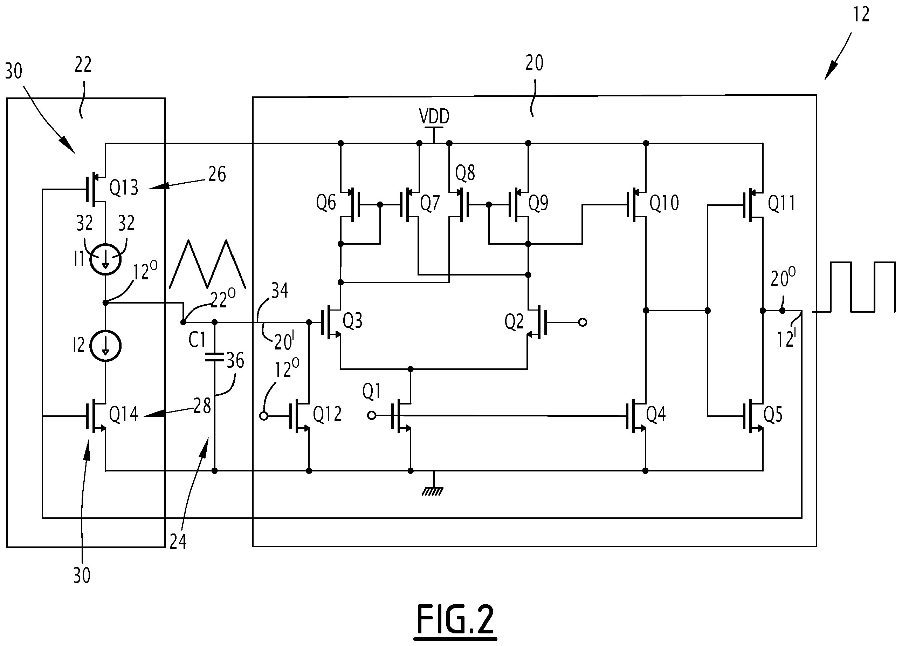

An example of a specific hysteresis block 20 can be found in figure 2.

In this figure 2, the hysteresis block 20 is a regenerative comparator with hysteresis.

For this, the hysteresis block 20 comprises a series of transistors Q1 to Q11 arranged to achieve such function.

Notably, the transistors Q7 and Q8 apply the positive feedback responsible for the hysteresis behavior. The inverter formed by Q5 and Q11 produces the digital output $20^O$.However, other configurations achieving a similar function are known.

Thus, in a more general way, the hysteresis block 20 is a Schmitt trigger.

A Schmitt trigger is a comparator circuit with hysteresis implemented by applying positive feedback to the noninverting input of a comparator or differential amplifier.

It can also be noted here that the hysteresis block 20 further comprises a transistor Q12 enabling to start the oscillation.

The transistor Q12 therefore serves as a switch with two states, an "OFF-state" wherein the oscillation is present and an "ON-state" wherein the oscillation is absent.

Thus, by adjusting the moment when the transistor Q12 turns off, the phase between the neuron units 12 is initialized. In other words, the gate of the transistor Q12 constitutes an initialization entry of the neuron unit 12.

The shaper block 22 is adapted to convert the digital output signal of the hysteresis block 20 into the analog signal having the triangular waveform.

In other words, driven by the hysteresis block 20, the shaper block 22 is adapted to produce an analog signal on its output 22$^O$, which is fed back to the hysteresis block 20 via an electrical connection 34 to produce oscillations.

The output 22° of the shaper block 22 is the input 12$^I$ of the neuron unit 12.

According to the case of figure 2, the shaper block 22 comprises a commanded pull-up current source 26 and a commanded pull-down current source 28.

Each current source 26 or 28 comprises a transistor 30 and a current generator 32.

The gate of each transistor 30 is connected to the output of the hysteresis block 20, so that each transistor 30 is controlled by the digital output signal of the hysteresis block 20.

The source of the transistor 30 of the pull-up current source 26 is connected to the alimentation source and thus put at a potential equal to $V_{dd}$.

The source of the transistor 30 of the pull-down current source 28 is connected to the ground.

Each current generator 32 is connected to the drain of a respective transistor 30 on one end and connected to each other on the other end.

The middle point between the current generators 32 corresponds to the output 22° of the shaper block 22.

The connection unit 24 is a physical interface circuit between the input of the hysteresis block 20 and the output of the shaper block 22 wherein the analog signal is injected.

In the present example, the connection unit 24 comprises the electrical connection 34 and a capacitor 36.

The electrical connection 34 is connected at one end to the input 20$^I$ of the hysteresis block 20 and at the other end to the output 22° of the shaper block 22.

The capacitor 36 is connected in parallel with the electrical connection 34.

The capacitor 36 is connected at one end to the ground.

The synapse units 14 are adapted to implement a synapse function.

In neural networks, a synapse makes the multiplication between its input and the synaptic weight.

Each synapse unit 14 is adapted to multiply a signal emitted by the digital output 12° from a neuron unit 12 with a respective synaptic weight, resulting in a weighted signal sent to the analog input 12$^I$ of the neuron unit 12

The synaptic weight can be written as:

$$K_{mn} = C_{mn}e^{j\theta_{mn}}$$

Where:

- $K_{mn}$ is the synaptic weight of the synapse unit 14 corresponding to the line m and the column n,
- $C_{mn}$ is the synaptic weight amplitude, that is the amplitude of the synaptic weight $K_{mn}$,
- j is the complex number, and
- $\theta_{mn}$ is the synaptic weight phase, that is the phase of the synaptic weight $K_{mn}$.

According to the enlarged block diagram of figure 1, each synapse unit 14 comprises a synaptic weight amplitude block 38 and a synaptic phase block 40.

Each synapse unit 14 further comprises a control unit 42.

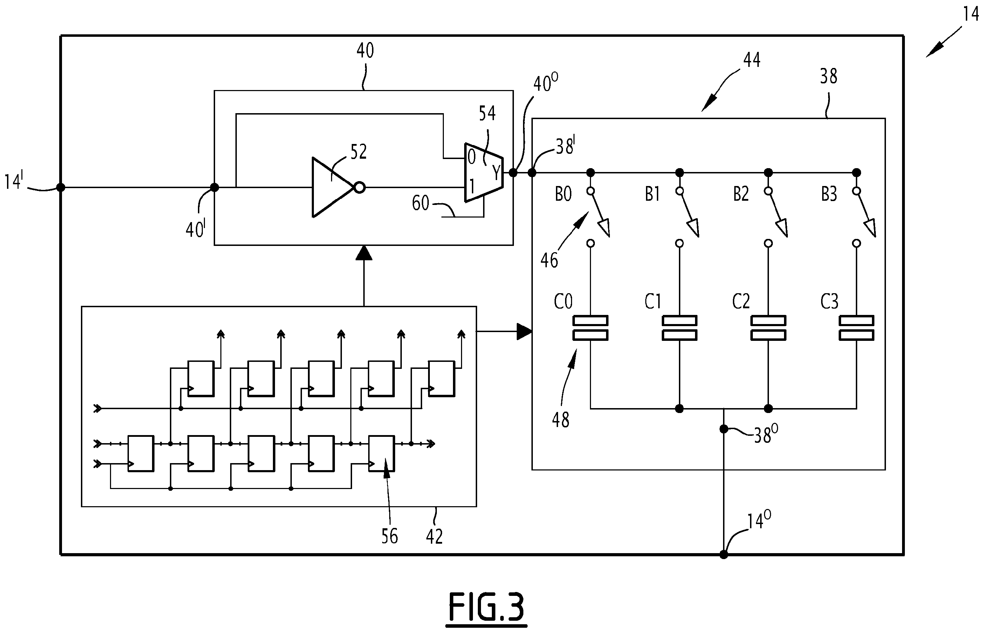

An example of implementation of a synaptic weight amplitude block 38 is represented on figure 3.

The synaptic weight amplitude block 38 implements the synaptic weight amplitude $C_{mn}$.

The synaptic weight amplitude block 38 comprises several programmable capacitors 44, the programmable capacitors 44 being in parallel.

As an example, each programmable capacitor 44 is a combination of a switch 46 and a capacitor 48 in series.

Preferably, the switches 46 and the capacitors 48 are the same components.

There is, in this specific example, the number of programmable capacitors 44 is equal to 4, so that the switches 46 are named B0 to B3 and the capacitors 48 are named C0 to C3 on figure 3.

With 4 programmable capacitors 44, the synaptic weight amplitude $C_{mn}$ is coded with a 4-bit resolution.

Of course, this number being non limitative, the resolution depending from the use of neuromorphic circuit 10.

The synaptic weight amplitude block 38 is connected via the synaptic phase block 40 to the input 14$^I$ of the synapse unit 14.

The synaptic weight amplitude block 38 thus implements the multiplication between its input voltage corresponding in amplitude to the input $14^I$ of the synapse unit 14 and its capacitance value, the capacitance value depending from the state of the switches B0 to B3 and the values of the capacitors C0 to C3.

The capacitors C0 to C3 thus converts the digital input waveform to a charge injected to the oscillator analog input, resulting in phase shift. In other words, a synapse unit 14 acts as a digital to analog phase converter.

Such signal corresponds the output signal of the synapse unit 14 since the output 38° of the synaptic weight amplitude block 38 is connected to the output $14^O$ of the synapse unit 14

In variant, the synaptic weight amplitude block 38 may be any number of capacitors 48, and notably one.

The synaptic phase block 40 is adapted to implement a synaptic weight phase $\theta_{mn}$.

The synaptic phase block 40 comprises a delay unit 52.

The delay unit 52 is adapted to delay the signal injected at the input $14^I$ by a given quantity.

In the present example, the quantity is $\tau_{mn} = T\frac{\theta_{mn}}{2\pi}$ where T is the period of oscillation.

An example of implementation of a delay unit with 1-bit of precision for the synaptic weight phase $\theta_{mn}$ is represented in figure 3, where $\theta_{mn}$= 0 or $\theta_{mn} = \pi$.

The delay unit 52 comprises an inverter that delays the synapse input signal $14^I$ by half an oscillation period.

Hence, the digital output $52^O$ is phase-shifted by 180° with respect to the digital input $14^I$, and corresponds to the case where $\theta_{mn} = \pi$.

The case where $\theta_{mn}$= 0 occurs when the synapse input signal $14^I$ is directly fed to the weight amplitude block 38 without any delay.

The multiplexer 54 is used to select one of the two digital signals $52^O$ or $14^I$, namely if $\theta_{mn} = \pi$ or $\theta_{mn}$=0, respectively. In other words, the multiplexer 54 sets the sign of the synaptic weight in the example of figure 3.

More precision on the synaptic weight phase $\theta_{mn}$ can be obtained by adding more inverters to the delay unit 52 and more multiplexer entries.

The synaptic phase block 40 thus applies a delay $\tau_{mn}$ to its input signal corresponding to the input $14^I$ of the synapse unit 14, the delay value being obtained from the control unit 42.

The control unit 42 is adapted to convert the synaptic weight $K_{mn}$ in an amplitude value $C_{mn}$ and a phase value $\theta_{mn}$ and to send the amplitude value $C_{mn}$ to the synaptic weight amplitude block 38 and to send the phase value $\theta_{mn}$ to the synaptic phase block 40.

For instance, an electrical signal is sent to the switches 48 so that they change their state (open or closed) in accordance with the amplitude value $C_{mn}$.

Similarly, an electrical signal is sent to the multiplexer 54 of the synaptic phase block 40 to select the multiplexer entry corresponding to the synaptic phase value $\theta_{mn}$, as schematically illustrated by the element 60 in figure 3.

Figure 3 illustrates schematically a possible implementation of such control unit 42 as a set of registers 56.

Each synapse unit 14 is therefore adapted to code for any complex synaptic weight $K_{mn}$ with any value of precision.

Alternatively, each synapse unit 14 is adapted to code for a synaptic weight either limited to a unique amplitude or a unique phase.

In such cases, the synapse unit 14 comprises only one block among the synaptic weight amplitude block 38 and the synaptic phase block 40 and the control unit 42.

In operating, it can be shown that such specific waveform leads to phase dynamics fulfilling the following equation:

$$\frac{d}{dt}\phi_m(t) = \omega_0 + \omega_0\frac{V_{dd}}{\Delta V}\sum_{n=1}^{N}\frac{C_{mn}}{C_L}.square(\phi_m(t) - \phi_n(t) + \theta_{mn})$$

Where:

- $\omega_0$ is the oscillating frequency,

- $\Delta V$ is the amplitude of the input triangular oscillation,

- $\sum_{n=1}^{N}$ sums the contributions of all neurons to the neuron m,

- $C_L$ is the capacitance load of the neuron input $12^I$ and corresponds to the capacitor 36 in figure 2,

- $C_{mn}$ is the capacitance value that implements the synaptic amplitude $K_{mn}$, and

-

$$square(X) = \begin{cases} -1, \text{if } 0 < X < \pi \\ +1, \text{if } \pi < X < 2\pi. \\ \phantom{+}0, \text{if } X \in \{0, \pi\} \end{cases}$$

By implementing the neuromorphic circuit 10 with such specific waveforms, its phase dynamics are determined by the compact ordinary differential equation previously defined. Thus, there is no need to perform time-consuming circuit-level simulations to check the neuromorphic circuit functionality, and only solving the ordinary differential equation suffices to obtain the computation result.

This advantage should be added to the other advantages provided by the neuromorphic circuit 10, as shown by the experiments carried out by the Applicant.

Notably, such ONN architecture is mix-signal architecture with analog phase computing and digital propagation. Indeed, oscillators compute in analog domain to enlarge the solution space whereas synaptic signals propagate in a digital way to enable efficient, automated large-scale ONN design and integration in heterogeneous systems. In particular, the neuromorphic circuit 10 is of very-low consumption.

In addition, the decoupling between the input and the output of the neuron unit 12 allows both feedforward and recurrent type of signal propagation. This implies that the neuromorphic circuit 10 can implement a large variety of different neural networks.

This renders such neuromorphic circuit 10 particularly adapted to solving optimization tasks, notably NP-hard problems, for transportation, logistics, machine scheduling, robotics...

As a specific example, the Applicant has shown that the neuromorphic circuit 10 is able to solve efficiently a weighted MAX-CUT problem, that is finding a subset of vertices such that the weights of edges between the subset and the rest of the vertices be maximum.

As other specific examples, it can be cited the resolution of MAX-CLIQUE problem, NP-hard Graph-coloring problem or NP-hard Travelling Salesman problems.

The neuromorphic circuit 10 can also be used for many other applications and notably in image processing. For instance, it has been demonstrated that such neuromorphic circuit 10 can be advantageously used for pattern recognition.

Another application can be the processing of any sensory data in connected devices, the associated sensor being for instance an image sensor, an audio sensor, a temperature sensor or a pressure sensor.

## Claims

1. Neuromorphic circuit (10) implementing an oscillatory neural network, the neuromorphic circuit (10) comprising :

   - neuron units (12), each neuron unit (12) being an analog oscillator adapted to convert an incoming analog signal having a triangular waveform on an analog input ($12^I$) of the neuron unit (12) into a digital output signal, and
   - synapse units (14), each synapse unit (14) being adapted to multiply a digital output from a neuron unit (12) with a respective synaptic weight to output a weighted signal sent to the analog input ($12^I$) of a neuron unit (12).

   wherein each neuron unit (12) comprises:

   - a hysteresis block (20) having an input ($20^I$) and an output (20°), the output (20°) of the hysteresis block (20) being a digital output signal, and
   - a shaper block (22) converting the digital output signal of the hysteresis block (20) into said analog signal having a triangular waveform, the shaper block (22) having an input ($22^I$) and an output (22°), and
   - a connection (24) between the input ($20^I$) of the hysteresis block (20) and the output ($22^O$) of the shaper block (22) wherein said analog signal is injected,

   wherein the shaper block (22) comprises a commanded pull-up current source (26) and a commanded pull-down current source (28),
   and wherein each synapse unit (14) comprises at least one of a synaptic weight amplitude block (38) and a synaptic phase block (40).

2. Neuromorphic circuit according to claim 1, wherein the hysteresis block (22) is a regenerative comparator with hysteresis.

3. Neuromorphic circuit according to claim 1, wherein the hysteresis block (22) is a Schmitt trigger.

4. -Neuromorphic circuit according to any one of the preceding claims, wherein the synaptic weight amplitude block (38) comprises at least one capacitor (46).

5. -Neuromorphic circuit according to any one of the preceding claims, wherein the synaptic weight amplitude block (38) comprises several programmable capacitors (44).

6. -Neuromorphic circuit according to any one of the preceding claims, wherein the synaptic phase block (40) comprises a delay unit (50).

7. -Neuromorphic circuit according to any one of the preceding claims, wherein each synapse unit (14) further comprises a control unit (42) adapted to convert the synaptic weight in an amplitude value and a phase value, to send the amplitude value to the synaptic weight amplitude block (38) and to send the phase value to the synaptic phase block (40).

8. -Neuromorphic circuit according to any one of the preceding claims, wherein the neuromorphic circuit (10) comprises digital connections between the synapse units (14) and the neuron units (12).

9. -Neuromorphic circuit according to any one of the preceding claims, wherein the neuromorphic circuit (10) is a programmable circuit, such as an ASIC.

**Patentansprüche**

1. Neuromorphe Schaltung (10), die ein oszillierendes neuronales Netzwerk implementiert, wobei die neuromorphe Schaltung (10) umfasst:

   - Neuroneneinheiten (12), wobei jede Neuroneneinheit (12) ein analoger Oszillator ist, der angepasst ist, um ein eingehendes analoges Signal mit einer Dreieckswellenform an einem analogen Eingang (12$^l$) der Neuronen-einheit (12) in ein digitales Ausgangssignal umzuwandeln, und
   - Synapseneinheiten (14), wobei jede Synapseneinheit (14) angepasst ist, um einen digitalen Ausgang einer Neuroneneinheit (12) mit einem entsprechenden synaptischen Gewicht zu multiplizieren, um ein gewichtetes Signal auszugeben, das an den analogen Eingang (12$^l$) einer Neuroneneinheit (12) gesendet wird,

   wobei jede Neuroneneinheit (12) umfasst:

   - einen Hystereseblock (20) mit einem Eingang (20$^l$) und einem Ausgang (20°), wobei der Ausgang (20°) des Hystereseblocks (20) ein digitales Ausgangssignal ist, und
   - einen Formerblock (22), der das digitale Ausgangssignal des Hystereseblocks (20) in das analoge Signal mit einer Dreieckswellenform umwandelt, wobei der Formerblock (22) einen Eingang (22$^l$) und einen Ausgang (22°) aufweist, und
   - eine Verbindung (24) zwischen dem Eingang (20$^l$) des Hystereseblocks (20) und dem Ausgang (22°) des Formerblocks (22), wobei das analoge Signal eingespeist wird,

   wobei der Formerblock (22) eine gesteuerte Pull-up-Stromquelle (26) und eine gesteuerte Pull-down-Stromquelle (28) umfasst,
   und wobei jede Synapseneinheit (14) mindestens einen synaptischen Gewichtsamplitudenblock (38) und einen synaptischen Phasenblock (40) umfasst.

2. Neuromorphe Schaltung nach Anspruch 1, wobei der Hystereseblock (22) ein regenerativer Komparator mit Hysterese ist.

3. Neuromorphe Schaltung nach Anspruch 1, wobei der Hystereseblock (22) ein Schmitt-Trigger ist.

4. Neuromorphe Schaltung nach einem der vorhergehenden Ansprüche, wobei der synaptische Gewichtsamplitudenblock (38) mindestens einen Kondensator (46) umfasst.

5. Neuromorphe Schaltung nach einem der vorhergehenden Ansprüche, wobei der synaptische Gewichtsamplitudenblock (38) mehrere programmierbare Kondensatoren (44) umfasst.

6. Neuromorphe Schaltung nach einem der vorhergehenden Ansprüche, wobei der synaptische Phasenblock (40) eine Verzögerungseinheit (50) umfasst.

7. Neuromorphe Schaltung nach einem der vorhergehenden Ansprüche, wobei jede Synapseneinheit (14) ferner eine Steuereinheit (42) umfasst, die angepasst ist, um das synaptische Gewicht in einen Amplitudenwert und einen Phasenwert umzuwandeln, den Amplitudenwert an den synaptischen Gewichtsamplitudenblock (38) zu senden und den Phasenwert an den synaptischen Phasenblock (40) zu senden.

8. Neuromorphe Schaltung nach einem der vorhergehenden Ansprüche, wobei die neuromorphe Schaltung (10) digitale Verbindungen zwischen den Synapseneinheiten (14) und den Neuroneneinheiten (12) umfasst.

9. Neuromorphe Schaltung nach einem der vorhergehenden Ansprüche, wobei die neuromorphe Schaltung (10) eine programmierbare Schaltung wie ein ASIC ist.

**Revendications**

1. Circuit neuromorphique (10) mettant en œuvre un réseau neuronal oscillatoire, le circuit neuromorphique (10) comportant :

   - des unités neurone (12), chaque unité neurone (12) étant un oscillateur analogique adapté pour convertir un signal analogique entrant ayant une forme d'onde triangulaire sur une entrée analogique ($12^l$) de l'unité neurone (12) en un signal de sortie numérique, et
   - des unités synapse (14), chaque unité synapse (14) étant adaptée pour multiplier une sortie numérique provenant d'une unité neurone (12) avec une pondération synaptique respective pour délivrer en sortie un signal pondéré envoyé à l'entrée analogique ($12^l$) d'une unité neurone (12). dans lequel chaque unité neurone (12) comprend :
   - un bloc à hystérésis (20) ayant une entrée ($20^l$) et une sortie (20°), la sortie (20°) du bloc à hystérésis (20) étant un signal de sortie numérique, et
   - un bloc conformateur (22) convertissant le signal de sortie numérique du bloc à hystérésis (20) en ledit signal analogique ayant une forme d'onde triangulaire, le bloc conformateur (22) ayant une entrée ($22^l$) et une sortie (22°), et
   - une liaison (24) entre l'entrée ($20^l$) du bloc à hystérésis (20) et la sortie (22°) du bloc conformateur (22) dans laquelle ledit signal analogique est injecté,

      dans lequel le bloc conformateur (22) comprend une source de courant de tirage commandée (26) et une source de courant de rappel commandée (28),
      et dans lequel chaque unité synapse (14) comprend au moins l'un parmi un bloc d'amplitude de pondération synaptique (38) et un bloc de phase synaptique (40).

2. Circuit neuromorphique selon la revendication 1, dans lequel le bloc à hystérésis (22) est un comparateur régénératif avec hystérésis.

3. Circuit neuromorphique selon la revendication 1, dans lequel le bloc à hystérésis (22) est un déclencheur de Schmitt.

4. Circuit neuromorphique selon l'une quelconque des revendications précédentes, dans lequel le bloc d'amplitude de pondération synaptique (38) comprend au moins un condensateur (46).

5. Circuit neuromorphique selon l'une quelconque des revendications précédentes, dans lequel le bloc d'amplitude de pondération synaptique (38) comprend au moins plusieurs condensateurs programmables (44).

6. Circuit neuromorphique selon l'une quelconque des revendications précédentes, dans lequel le bloc de phase synaptique (40) comprend une unité à retard (50).

7. Circuit neuromorphique selon l'une quelconque des revendications précédentes, dans lequel chaque unité synapse (14) comprend en outre une unité de contrôle (42) adaptée pour convertir la pondération synaptique en une valeur d'amplitude et une valeur de phase, pour envoyer la valeur d'amplitude au bloc d'amplitude de pondération synaptique (38) et pour envoyer la valeur de phase au bloc de phase synaptique (40).

8. Circuit neuromorphique selon l'une quelconque des revendications précédentes, dans lequel le circuit neuromorphique (10) comprend des liaisons numériques entre les unités synapse (14) et les unités neurone (12).

9. Circuit neuromorphique selon l'une quelconque des revendications précédentes, dans lequel le circuit neuromorphique (10) est un circuit programmable, tel qu'un ASIC.

## FIG.1

<u>FIG.2</u>

EP 4 361 893 B1

EP 4 361 893 B1

FIG.3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *SophIA Summit 2020 Talk Abstract 'Neuromorphic Computing based on Oscillatory Neural Networks*, https://hal-lirmm.ccsd.cnrs.fr/ lirmm-03022129v1/document